(19) Europäisches Patentamt / European Patent Office / Office européen des brevets

(11) **EP 2 990 904 B1**

(12) **FASCICULE DE BREVET EUROPEEN**

(45) Date de publication et mention
de la délivrance du brevet:
**06.05.2020 Bulletin 2020/19**

(51) Int Cl.:
*G05D 23/19* (2006.01)    *H02J 3/14* (2006.01)
*G06N 5/04* (2006.01)    *G05B 13/02* (2006.01)

(21) Numéro de dépôt: **15182169.1**

(22) Date de dépôt: **24.08.2015**

(54) **PROCÉDÉ DE GESTION DE LA CONSOMMATION D'ÉLECTRICITÉ D'UN RÉSEAU ÉLECTRIQUE**

VERFAHREN ZUR STEUERUNG DES STROMVERBRAUCHS EINES STROMNETZES

METHOD FOR MANAGING THE POWER CONSUMPTION OF AN ELECTRICAL NETWORK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.08.2014 FR 1457984**

(43) Date de publication de la demande:
**02.03.2016 Bulletin 2016/09**

(73) Titulaire: **COMMISSARIAT À L'ÉNERGIE
ATOMIQUE ET AUX
ÉNERGIES ALTERNATIVES
75015 Paris (FR)**

(72) Inventeur: **TRAN, Quoc-Tuan
38610 GIERES (FR)**

(74) Mandataire: **Novaimo
Europa 1
362, avenue Marie Curie
Archamps Technopole
74166 Saint Julien-en-Genevois Cedex (FR)**

(56) Documents cités:
**WO-A1-97/47066    WO-A2-2009/108962
US-A- 4 100 428    US-A- 5 462 225**

## Description

L'invention concerne un procédé de régulation de la consommation électrique d'un réseau électrique et un dispositif de régulation destiné à équiper un consommateur d'électricité.

Un réseau électrique permet d'acheminer de l'énergie électrique depuis des centres de production d'électricité vers des consommateurs d'électricité. Il doit maintenir un équilibre entre la production et la consommation et assurer, par une gestion dynamique, la stabilité de l'ensemble production - transport - consommation.

Dans une région géographique donnée, la consommation d'électricité est sensible à la température extérieure. Par exemple, en France, en hiver, la consommation électrique augmente globalement, en raison d'une consommation électrique accrue des installations de chauffage dans les habitations, et des pics de consommation se produisent à certaines heures de la journée, typiquement durant la tranche horaire 18h-21 h.

Il existe actuellement diverses solutions pour gérer ces pics de consommation :

- importer de l'électricité en provenance d'un autre pays ;
- produire davantage d'électricité en faisant appel à des moyens de production supplémentaires (centrales au gaz, fuel ou charbon) qui ne fonctionnent généralement qu'en période de forte consommation ;
- réduire la consommation d'un certain nombre de consommateurs par un processus dit « d'effacement de consommation ».

Ces trois solutions donnent des résultats équivalents en termes de service rendu aux consommateurs et d'équilibrage entre la production et la consommation. Les deux premières solutions présentent toutefois l'inconvénient d'augmenter la pollution et le risque d'accidents.

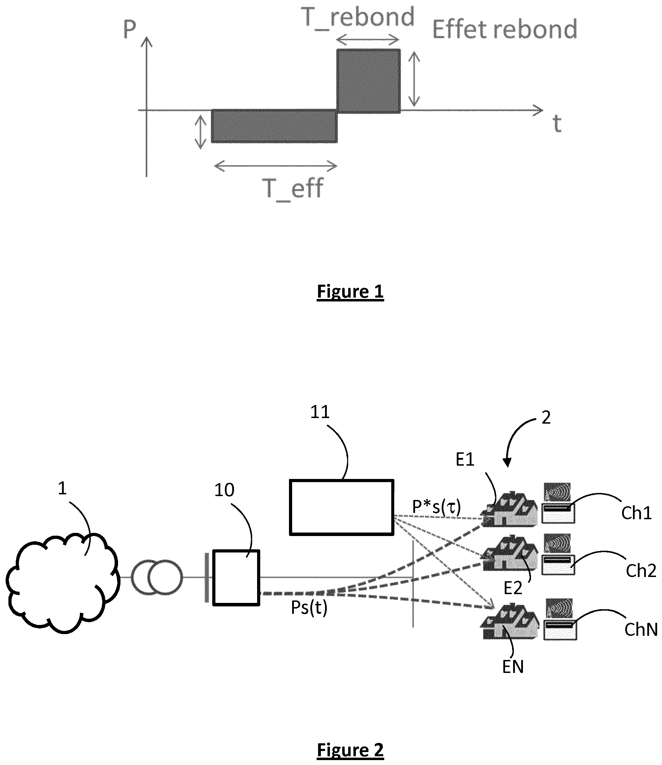

La troisième solution, basée sur l'effacement de la consommation, consiste, en cas de déséquilibre entre la production d'électricité et la demande d'électricité des consommateurs, à réduire la consommation d'une partie au moins de ces consommateurs. Par exemple, en référence à la figure 1, on peut interrompre pendant une courte durée T_eff, de façon synchronisée, l'alimentation électrique des installations thermiques de chauffage situées dans un grand nombre d'habitations. Cela permet de réduire la consommation globale d'électricité d'une région ou d'un pays, pendant la durée de la coupure T_eff. En définitive, la gestion des pics de consommation est ainsi effectuée en pilotant les installations de chauffage électrique. Une telle solution s'avère très intéressante. Elle présente toutefois plusieurs inconvénients. En effet, l'arrêt momentané des installations thermiques provoque une surconsommation juste après la reconnexion de ces installations, durant une période T_rebond telle que représentée sur la figure 1. En définitive, l'énergie qui aurait normalement été consommée pendant la période de coupure T_eff est entièrement consommée juste après le redémarrage des installations thermiques durant la période T_rebond. Ce phénomène, appelé « effet rebond », réduit fortement l'intérêt des méthodes de gestion des pics de consommation par effacement. De surcroît, il peut avoir des conséquences négatives sur le réseau électrique : surcharges, déséquilibres importants imprévus, voire black out du réseau.

Le document US 4 100 428 A décrit un système de contrôle de la consommation électrique d'un réseau comportant une pluralité de charges thermiques avec des éléments de chauffage ou de refroidissement. Un tel système détermine de façon centralisée une fraction L d'éléments/ charges thermiques à connecter en fonction d'un écart de température entre une température cible Ta et une température Ti mesurée. La présente invention vise à améliorer la situation.

A cet effet, l'invention concerne un procédé de gestion de la consommation d'électricité d'un réseau électrique auquel est relié un ensemble d'entités consommatrices équipées chacune d'une installation thermique consommant de l'électricité pour réguler une température de l'entité, comprenant les étapes suivantes, mises en œuvre parallèlement par chaque entité consommatrice pour un instant donné :

    a) détermination d'une première donnée représentative d'un écart de puissance entre la puissance électrique consommée par l'ensemble des entités consommatrices et une puissance électrique de consigne ;
    b) détermination d'une deuxième donnée représentative d'un écart de température entre une mesure de la température régulée de ladite entité et une température de référence propre à ladite entité ;
    c) détermination d'un coefficient de régulation de puissance pour ladite entité à partir de la première donnée d'écart de puissance et de la deuxième donnée d'écart de température ;
    d) commande d'une réduction de la puissance consommée par ladite entité en fonction du coefficient de régulation déterminé.

Les entités consommatrices peuvent être des habitations, ou plus généralement des bâtiments, équipés d'une installation thermique, par exemple un chauffage électrique. Chaque entité consommatrice a une température de référence pré-configurée. Cette température de référence est propre à l'entité et correspond à un niveau de confort thermique souhaité par l'entité.

L'invention permet de réduire la puissance globale consommée, en limitant la puissance consommée par l'installation thermique au niveau de chaque entité consommatrice, de manière auto-adaptative et autonome, sans déconnexion autoritaire de l'installation thermique. En outre, l'invention ne nécessite ni la transmission d'une quantité importante de données, ni le traitement complexe de données, qui sont des opérations coûteuses (par exemple prévision de consommation, prévision de météo, modèle thermique des bâtiments ...). La limitation de puissance au niveau de chaque entité tient compte de deux paramètres. Le premier paramètre est l'écart entre la consigne de puissance imposée par le réseau (c'est-à-dire la puissance de référence souhaitée par le réseau et constituant une puissance maximale à ne pas dépasser) et la puissance globale réellement consommée, ou tout au moins demandée, par l'ensemble des entités consommatrices. Le deuxième paramètres est l'écart entre la température de référence de l'entité et la température réelle mesurée dans l'entité. Cet écart de température permet de caractériser un éventuel décalage entre le confort thermique souhaité par l'entité et le confort thermique réel dans l'entité. La prise en compte de ces deux paramètres permet à chaque entité de limiter la consommation électrique de son installation thermique, sans coupure de celle-ci, de manière à contribuer à l'effort global de réduction de la consommation et éviter un pic de consommation, tout maintenant un confort thermique proche de celui souhaité par cette entité. En définitive, l'invention permet de limiter les pics de consommation globale d'électricité tout en préservant au maximum le confort thermique des entités consommatrices.

Avantageusement, la détermination du coefficient de régulation est adaptée pour que la réduction de puissance de chaque entité consommatrice, déterminée à partir du coefficient de régulation, soit d'autant plus importante que ledit écart de température de l'entité consommatrice est faible.

Ainsi, plus la température mesurée de l'entité consommatrice considérée est proche de sa température de consigne, plus cette entité consommatrice va réduire sa consommation individuelle et contribuer à la réduction globale de puissance. A l'inverse, une entité dont la température mesurée est très éloignée de sa température de référence contribuera moins à l'effort de réduction de la puissance demandée. Ainsi les entités ayant un confort thermique inférieur à celui souhaité contribuent moins à la réduction globale de consommation que les entités ayant un confort thermique proche ou égal à celui souhaité.

Avantageusement encore, les étapes a) à d) sont réitérées jusqu'à ce que la puissance électrique demandée par l'ensemble des entités consommatrices soit inférieure ou égale à la puissance de consigne.

La répétition en boucle des étapes a) à d) permet de réduire la consommation globale de façon ajustée de manière à préserver un maximum de confort thermique pour les entités consommatrices sans besoin de modèles thermiques des bâtiments et/ou d'informations de prévision (consommation et météo).

Dans un mode de réalisation particulier, l'exécution des étapes a) à d) est déclenchée sur réception d'une commande du réseau, notamment d'une commande contenant une puissance de consigne.

Avantageusement, chaque entité reçoit en temps réel la puissance globale consommée par l'ensemble des entités consommatrices, en provenance du réseau.

Dans un mode de réalisation particulier, le coefficient de régulation est déterminé par une méthode de calcul basée sur la logique floue.

Avantageusement, la détermination du coefficient de régulation comprend

- une première sous-étape de fuzzification lors de laquelle la première donnée d'écart de puissance est traduite en degré(s) d'appartenance à un ou plusieurs sous-ensembles qui caractérisent une première composante de contribution de l'entité à une diminution de consommation globale de puissance ;
- une deuxième sous-étape de fuzzification lors de laquelle la deuxième donnée d'écart de température est traduite en degré(s) d'appartenance à un ou plusieurs sous-ensembles qui caractérisent une deuxième composante de contribution de l'entité à la diminution de consommation globale de puissance ;
- une troisième sous-étape d'inférence lors de laquelle, à partir des résultats des première et deuxième sous_étapes de fuzzification et de règles d'inférence prédéfinies, on détermine au moins un degré d'appartenance à un ou plusieurs sous-ensembles qui caractérisent le coefficient de régulation de puissance;
- une quatrième sous-étape de défuzzification lors de laquelle on détermine une valeur numérique de coefficient de régulation à partir des résultats de la sous-étape de défuzzification.

Les entités consommatrices peuvent être équipées de l'une au moins des installations thermiques du groupe comportant une installation de chauffage électrique, un chauffe-eau électrique et une installation de climatisation.

La température de l'entité régulée par l'installation thermique peut être une température atmosphérique dans un bâtiment ou une température d'eau chauffée.

L'invention concerne aussi un dispositif de régulation de la consommation d'électricité d'une entité consommatrice reliée à un réseau électrique, adapté pour la mise en œuvre du procédé tel que précédemment défini, ladite entité comportant une installation thermique consommant de l'électricité et destinée à réguler une température de l'entité et appartenant à un ensemble d'entités consommatrices, comprenant :

- un premier module de communication adapté pour recevoir une puissance électrique globale consommée par ledit ensemble d'entités et une puissance de consigne, en provenance du réseau électrique;
- un deuxième module de communication adapté pour recevoir une température de l'entité mesurée à un instant donné ;
- un module de détermination d'une première donnée représentative d'un écart entre la puissance électrique globale consommée à un instant donné et une puissance électrique de consigne,
- un module de détermination d'une deuxième donnée représentative d'un écart de température entre une température mesurée de l'entité pour l'instant considéré et une température de référence de l'entité,
- un module de détermination d'un coefficient de régulation de puissance pour l'entité à partir de la première donnée d'écart de puissance et de la deuxième donnée d'écart de température,
- un module de commande destiné à commander une réduction de la puissance consommée par l'installation thermique de l'entité consommatrice dépendant du coefficient de régulation déterminé.

L'invention concerne encore un programme d'ordinateur comportant des instructions de code de programme pour l'exécution des étapes du procédé tel lorsque ledit programme est exécuté sur un ordinateur.

L'invention sera mieux comprise à l'aide de la description suivante d'un mode de réalisation particulier du procédé de gestion de la consommation d'électricité d'un réseau électrique et d'un exemple particulier de réalisation d'un dispositif de régulation associé, en référence aux dessins annexés sur lesquels :

- la figure 2 représente schématiquement un réseau électrique et un ensemble d'entités consommatrices d'électricité connectées au réseau ;
- la figure 3 représente les étapes principales de calcul d'un coefficient de régulation de puissance d'une entité consommatrice, selon un mode de réalisation particulier du procédé de l'invention ;
- la figure 4 représente des fonctions d'appartenance de logique floue relatives à une variable d'écart de puissance ;
- la figure 5 représente des fonctions d'appartenance de logique floue relatives à une variable d'écart de température ;
- la figure 6 représente des fonctions d'appartenances de logique floue relatives à un coefficient de régulation de puissance ;
- la figure 7A représente une table d'inférence simplifiée, selon un exemple particulier de réalisation ;
- la figure 7B représente une surface d'inférence à 3D, selon l'exemple particulier de réalisation, représentant en trois dimensions le coefficient de régulation en fonction des variables d'écart de température et d'écart de puissance ;
- la figure 7C représente des courbes d'évolution du coefficient de régulation en fonction de l'écart de température, pour deux valeurs différentes de réduction de consommation électrique demandée ;
- la figure 8 représente schématiquement les différentes étapes de détermination d'une réduction de puissance à appliquer mises en œuvre par une entité consommatrice, selon un mode de réalisation particulier de l'invention ;
- les figures 9 et 10 représentent respectivement l'évolution temporelle de la puissance globale consommée par l'ensemble des entités consommatrices de la figure 2 et l'évolution temporelle de la température atmosphérique intérieure de l'une des entités consommatrices de l'ensemble, sans l'invention ;
- les figures 11 et 12 représentent respectivement l'évolution temporelle de la puissance globale consommée par l'ensemble des entités consommatrices de la figure 2 et l'évolution temporelle de la température atmosphérique intérieure de l'une des entités consommatrices de l'ensemble, avec l'invention ;
- la figure 13 représente un organigramme des étapes du procédé de gestion de la consommation d'électricité d'un réseau électrique, selon un mode de réalisation particulier de l'invention ;
- la figure 14 représente un schéma bloc fonctionnel d'un dispositif de régulation de la consommation d'électricité d'une entité consommatrice reliée au réseau électrique, destiné à mettre en œuvre le procédé de la figure 13.

Le procédé de l'invention vise à réguler la consommation d'électricité d'un réseau électrique 1 auquel sont reliés des consommateurs d'électricité.

Sur la figure 2, on a représenté un ensemble 2 d'entités consommatrices d'électricité E1, E2, ..., Ei, ..., EN reliées au réseau électrique 1. Par exemple, l'ensemble 2 comprend des habitations situées dans une zone géographique donnée, telle qu'un quartier d'une ville. Chaque entité Ei (avec i=1, ..., N) est équipée d'une installation thermique consommant de l'électricité qui peut être, de façon non exhaustive, un chauffage électrique, un chauffe-eau ou une installation de climatisation.

Dans l'exemple particulier décrit ici, chaque entité Ei est équipée d'une installation de chauffage électrique Chi (avec i=1, ..., N) destinée à chauffer l'air intérieur de l'entité, d'un dispositif de pilotage du chauffage (non représenté) et d'un capteur thermique destiné à mesurer la température de l'air à l'intérieur de l'entité. Chaque installation de chauffage Chi a une puissance nominale prédéfinie (c'est-à-dire une puissance délivrée dans des conditions nominales d'utilisation fournies par le fabricant). Le dispositif de pilotage est configuré avec une température de référence. Cette température de référence définit un niveau de confort thermique souhaité par l'entité Ei. Dans l'exemple particulier décrit ici, la température de référence est une température maximale souhaitée dans l'entité Ei et notée ici Tset_max$_i$. Le pilotage du chauffage permet de réguler la température de manière à ce qu'elle oscille légèrement juste au-dessous de cette température maximale. La température de référence pourrait être une température moyenne.

Le module de pilotage intègre un premier module de communication avec le réseau électrique 1 et un deuxième module de communication avec le capteur thermique.

Le premier module de communication est destiné à recevoir :

- des données relatives à la puissance globale $Ps(\tau)$ consommée par l'ensemble des entités consommatrices Ei (avec i=1, ..., N), mesurées et transmises en temps réel (t) par un dispositif 10 du réseau 1, et
- des données relatives à une puissance de consigne P*s demandée par le réseau 1 à un instant donné $\tau$, transmises par un agrégateur ou un gestionnaire 11 du réseau.

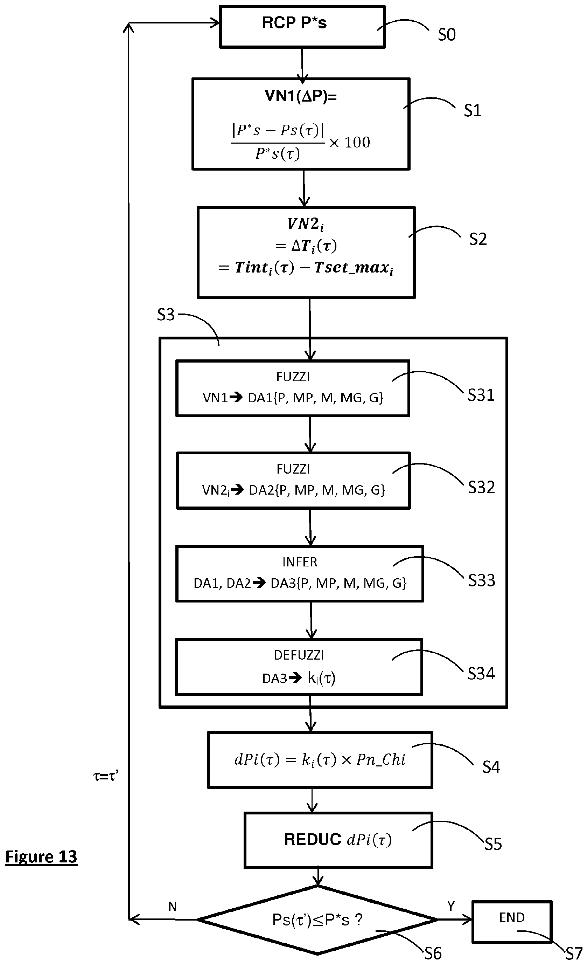

On va maintenant décrire, en référence à la figure 13, les étapes du procédé de gestion, ou de régulation, de la consommation d'électricité du réseau électrique 1 auquel sont reliées les entités consommatrices E1 à EN.

Lors d'une étape S0, à un instant $\tau$, les entités E1 à EN reçoivent une commande pour réduire la puissance électrique consommée, en provenance du gestionnaire du réseau 11. La commande contient ici la valeur d'une puissance de consigne P*s. Cette puissance de consigne P*s, ou de référence, constitue la puissance globale maximale que l'ensemble des entités E1 à EN est autorisé à consommer. La commande signale aux entités E1 à EN qu'elles doivent réduire leurs consommations électriques individuelles pour atteindre une consommation globale inférieure ou égale à P*s. En variante, la commande transmise pourrait contenir toute autre valeur représentative de cette puissance de consigne P*s, par exemple un pourcentage de variation de puissance globale souhaitée par le réseau 1.

Suite à la réception de la commande de réduction (S0), chaque entité E1 à EN déclenche l'exécution des étapes de régulation S1 à S5. La régulation est exécutée parallèlement, de façon auto-adaptative et autonome, par les différentes entités E1 à EN, pour l'instant $\tau$ considéré.

Lors d'une étape S1, chaque entité Ei détermine une première variable numérique (ou donnée) VN1 représentative de l'écart de puissance $\Delta P$ entre la puissance électrique globale $Ps(\tau)$ consommée par l'ensemble des entités consommatrices à l'instant $\tau$, ou sensiblement à l'instant $\tau$, communiquée en temps réel par le réseau 1, et la puissance électrique de consigne P*s commandée par le gestionnaire de réseau 11. La variable VN1 est ici égale à la différence entre la puissance de consigne P*s et la puissance consommée $Ps(\tau)$, divisée par la puissance de consigne P*s. Elle est exprimée en pourcentage. Autrement dit :

$$VN1 = \frac{P^*s - Ps(\tau)}{P^*s} \times 100$$

Le signe (négatif ou positif) de VN1 permet de déterminer s'il faut réduire ou augmenter la puissance.

Parallèlement, lors d'une étape S2, chaque entité Ei (avec i=1, ..., N) détermine une deuxième variable numérique $VN2_i$ représentative d'un écart de température $\Delta T_i$ qui lui est propre. L'étape S2 comprend une première sous-étape de mesure de la température $Tint_i(\tau)$ à l'instant $\tau$, ou sensiblement peu après cet instant $\tau$, de l'air à l'intérieur de l'entité considérée Ei. Une deuxième sous-étape de calcul est ensuite réalisée. Elle consiste à calculer l'écart de température $\Delta T_i(\tau)$ entre la température intérieure mesurée $Tint_i(\tau)$ et la température de référence $Tset\_max_i$. Cette température de référence $Tset\_max_i$ correspond ici à une température maximale préconfigurée et enregistrée dans le module de pilotage de l'installation thermique. Elle définit le niveau de confort thermique souhaité par l'entité Ei. Lors de la deuxième sous-étape de calcul, chaque entité Ei calcule donc :

$$VN2_i = \Delta T_i(\tau) = Tint_i(\tau) - Tset\_max_i$$

Lorsque l'écart $\Delta T_i(\tau)$ est strictement positif, cela signifie que la température mesurée à l'intérieur de l'entité Ei est supérieure à la température de référence $Tset\_max_i$. Par exemple, cela se produit lorsque l'entité Ei est chauffée non seulement par le chauffage Chi mais également par des moyens additionnels de chauffage. Dans ce cas, le module de pilotage coupe l'installation thermique de sorte que la régulation mise en œuvre par le procédé de l'invention n'est pas nécessaire pour cette entité.

Lorsque l'écart $\Delta T_i(\tau)$ est négatif ou nul, le procédé se poursuit.

L'étape S2 est suivie d'une étape S3 de détermination d'un coefficient de régulation de puissance $k_i(\tau)$, mise en œuvre par chaque entité Ei. Ce coefficient de régulation est représentatif de la contribution de l'entité Ei à la baisse de consommation électrique globale demandée par le réseau 1. Dans l'exemple particulier décrit ici, il est destiné à être multiplié par la puissance électrique nominale de l'installation thermique de l'entité Ei afin de déterminer l'amplitude de la réduction de puissance à appliquer par cette entité Ei. Le coefficient de régulation est déterminé à partir la première variable d'écart de puissance VN1 et de la deuxième variable d'écart de température $VN2_i$. Ainsi, le coefficient de régulation $k_i(\tau)$, calculé pour l'instant $\tau$ et pour l'entité consommatrice Ei, dépend de la quantité globale de puissance à réduire et de l'écart entre la température intérieure réelle de l'entité Ei et la température de confort souhaitée (c'est-à-dire la température préconfigurée de référence). De préférence, la détermination du coefficient de régulation est adaptée pour que la réduction de puissance de chaque entité consommatrice Ei soit d'autant plus importante que l'écart de température $\Delta T_i(\tau)$ de ladite entité consommatrice Ei est faible en valeur absolue.

Dans l'exemple de réalisation particulier décrit

ici, le coefficient $k_i(\tau)$ est déterminé par une méthode de calcul basée sur la logique floue mise en œuvre par un système flou. L'étape S3 comprend les sous-étapes suivantes mises en œuvre par chaque entité Ei :

- une première sous-étape de fuzzification S31 lors de laquelle la première donnée VN1 d'écart de puissance est traduite en degré(s) d'appartenance DA1 à un ou plusieurs sous-ensembles qui caractérisent une première composante de contribution de l'entité Ei à la diminution de consommation globale de puissance ;
- une deuxième sous-étape de fuzzification S32 lors de laquelle la deuxième donnée VN2 d'écart de température est traduite en degrés d'appartenance DA2 à un ou plusieurs sous-ensembles qui caractérisent une deuxième composante de contribution de l'entité Ei à la diminution de consommation globale de puissance ;
- une troisième sous-étape d'inférence S33 lors de laquelle, à partir des résultats des sous_étapes S31 et S32 et de règles d'inférence prédéfinies, on détermine des degrés d'appartenance DA3 à un ou plusieurs sous-ensembles qui caractérisent le coefficient de régulation de puissance ;
- une quatrième sous-étape de défuzzification S34 lors de laquelle on détermine une valeur numérique de coefficient de régulation, c'est-à-dire $k_i(\tau)$, à partir des résultats de la sous-étape S33.

Les sous-ensembles qui caractérisent chacune des deux composantes de contribution (ou de participation) de l'entité considérée Ei à la baisse de consommation globale sont ici au nombre de cinq. Bien entendu, le nombre de sous-ensembles pourrait être égal à toute autre valeur supérieure ou égale à 1. En outre, les deux composantes de contribution, respectivement relatives à l'écart de puissance et à l'écart de température, pourraient être définies par des nombres de sous-ensembles différents. Les sous-ensembles sont respectivement définis par des variables linguistiques. Les cinq sous-ensembles de chaque composante de contribution sont définis par les cinq variables suivantes :

- « P » pour « Petite participation »,
- « MP » pour « Moyennement Petite participation »,
- « M » pour « Moyenne participation »,
- « MG » pour « Moyennement Grande participation » et
- « G » pour « Grande participation ».

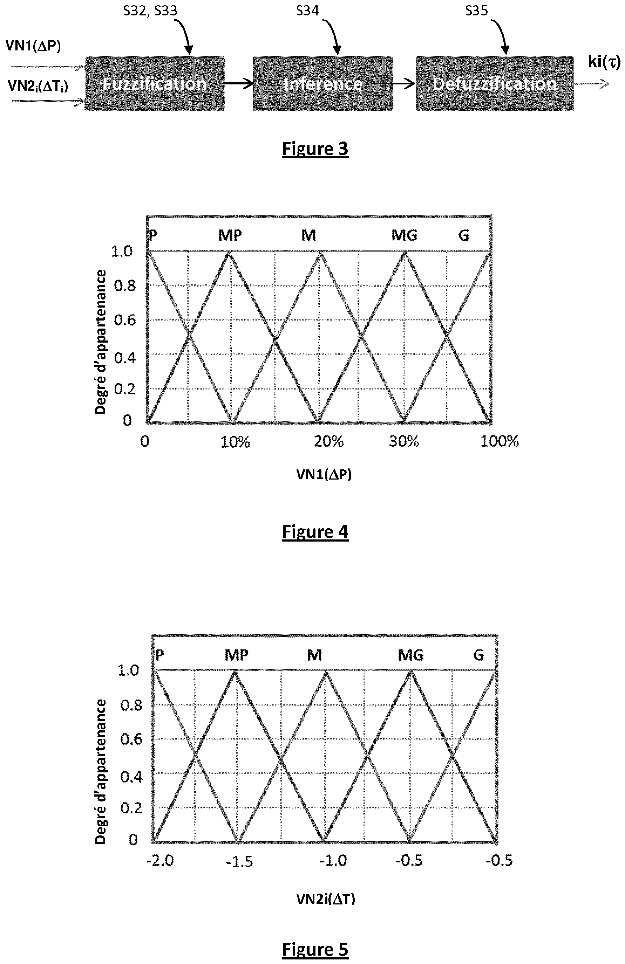

Sur la figure 4, on a représenté les cinq fonctions d'appartenance aux cinq sous-ensembles P, MP, M, MG et G relatives à l'écart de puissance (VN1). Sur cette figure 4, la variable VN1 d'écart de puissance, pouvant varier de 0% à 100%, est représentée en abscisse et les degrés d'appartenance aux sous-ensembles, compris entre 0 et 1, sont représentés en ordonnée.

Sur la figure 5, on a représenté les cinq fonctions d'appartenances aux cinq sous-ensembles P, MP, M, MG et G relatives à l'écart de température (VN2$_i$). Sur cette figure 5, la variable VN2 d'écart de température, variant entre - 2°C, ou toute autre valeur inférieure à -2°C (par exemple -3°C), et -0,5°C, est représentée en abscisse et les degrés d'appartenance aux différents sous-ensembles sont représentés en ordonnée.

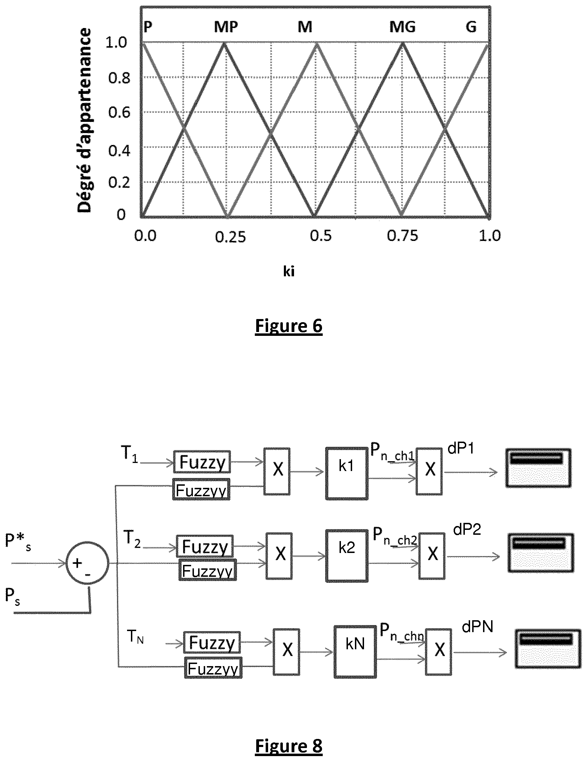

Sur la figure 6, on a représenté les cinq fonctions d'appartenances aux cinq sous-ensembles P, MP, M, MG et G relatives au coefficient de régulation $k_i$. Sur cette figure 6, la valeur du coefficient de régulation $k_i$, variant entre 0 et 1, est représentée en abscisse et les degrés d'appartenance aux différents sous-ensembles sont représentés en ordonnée.

Les fonctions d'appartenance représentées sur les figures 4 à 6 sont prédéfinies lors de la conception du système flou, pour les variables VN1, VN2i et $k_i$. Les formes de ces fonctions telles que représentées sur ces figures 4 à 6 sont des exemples particuliers de réalisation, non limitatifs. On pourrait envisager d'utiliser des fonctions d'appartenance ayant des formes différentes.

A l'issue des sous-étapes S31 et S32, on obtient pour chaque entité consommatrice Ei les données suivantes :

- des données d'appartenance aux sous-ensembles P, MP, M, MG et G définissant une première composante de participation, à partir de l'écart de puissance VN1 ;
- des données d'appartenance aux sous-ensembles P, MP, M, MG et G définissant une deuxième composante de participation, à partir de l'écart de température VN2$_i$ propre à l'entité Ei.

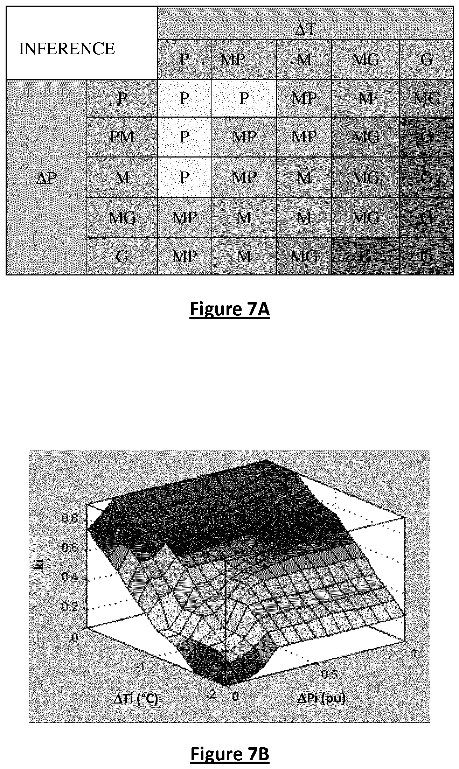

Lors de la sous-étape d'inférence S33, le système flou détermine les degrés, ou données, d'appartenance du coefficient de régulation $k_i$ de l'entité Ei à partir des données d'appartenance obtenues à l'issue des sous-étapes S31 et S32, à partir de règles d'inférence prédéfinies. Le tableau de la figure 7A représente, de façon simplifiée, les règles d'inférence s'appliquant à des degrés d'appartenance aux sous-ensembles P, MP, M, MG et G égaux à 1. Chaque colonne correspond à un sous-ensemble d'écart de température et chaque ligne correspond à un sous-ensemble d'écart de puissance. Les cases situées à l'intersection d'une ligne et d'une colonne fournissent un sous-ensemble résultant pour le coefficient de régulation ki.

La sous-étape suivante de défuzzification S34 consiste à déterminer une valeur numérique du coefficient de régulation $k_i$ à partir des données d'appartenance déterminées aux sous-étapes S32 et S33. On obtient ainsi, pour chaque entité Ei et pour l'instant $\tau$, un coefficient de régulation $k_i(\tau)$.

La figure 7B est une représentation graphique en trois dimensions du coefficient de régulation ki en fonction de l'écart de température $\Delta Ti$, d'une part, et de l'écart de puissance relatif $\Delta Pi = \frac{|P^*s - Ps(\tau)|}{P^*s}$, d'autre part. Cette représentation est un graphe d'inférence, ayant en l'espèce la forme d'une surface. Cette surface d'inférence contient différentes zones correspondant aux différents sous-ensembles P, MP, M, MG et G du coefficient ki.

En fonction de l'écart de température $\Delta Ti$ de chaque entité Ei, le coefficient de régulation ki est différent. Le tableau 1, ci-dessous, représente différentes valeurs numériques du coefficient ki pour différentes valeurs numériques d'écart de température, avec une réduction de 10% de la consommation de puissance électrique ($\Delta Pi=0,1$). Le tableau 2, ci-dessous, représente différentes valeurs numériques du coefficient ki pour différentes valeurs numériques d'écart de température, avec une réduction de 50% de la consommation de puissance électrique ($\Delta Pi=0,5$).

Tableau 1 :

| $\Delta Pi$ | $\Delta Ti$ | ki |
|------|------|------|
| 0.1 | 0 | 0.92 |
| 0.1 | -0.4 | 0.756 |
| 0.1 | -0.8 | 0.466 |
| 0.1 | -1.2 | 0.250 |
| 0.1 | -1.6 | 0.244 |
| 0.1 | -2.0 | 0.08 |

Tableau 2 :

| $\Delta Pi$ | $\Delta Ti$ | k |
|------|------|------|
| 0.5 | 0 | 0.924 |
| 0.5 | -0.4 | 0.761 |
| 0.5 | -0.8 | 0.618 |
| 0.5 | -1.2 | 0.586 |
| 0.5 | -1.6 | 0.437 |
| 0.5 | -2.0 | 0.25 |

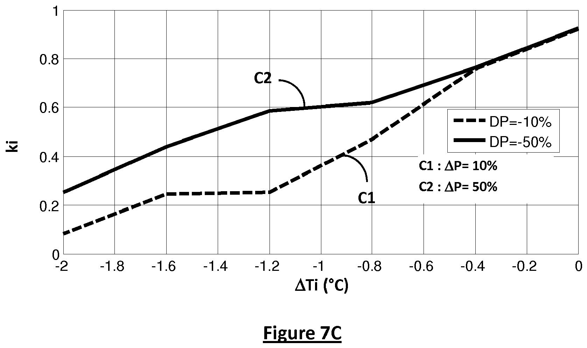

Sur la figure 7C, on a représenté :

- une première courbe C1 d'évolution du coefficient ki en fonction de l'écart de température $\Delta Ti$ pour une réduction de 10% de la consommation de puissance électrique ;
- une deuxième courbe C2 d'évolution du coefficient ki en fonction de l'écart de température $\Delta Ti$ pour une réduction de 50% de la consommation de puissance électrique.

Cette figue 7C illustre en définitive la variation du coefficient ki en fonction d'une variation de l'écart de température avec deux sensibilités différentes induites par deux valeurs différentes de réduction de puissance.

On constate ainsi que :

- une entité qui a un écart de température plus important que celui d'une autre entité, a un coefficient de régulation moins élevé que celui de l'autre entité et donc participe moins à réduire la puissance l'autre entité ;
- lorsque la réduction de consommation électrique demandée par le réseau électrique est plus importante, les coefficients de régulation sont plus élevés (la courbe C2 est globalement située au-dessus de la courbe C1), autrement dit la participation de réduction de puissance de chaque entité est plus importante.

Lors d'une étape S4, chaque entité Ei calcule une amplitude de réduction de puissance à appliquer $dPi(\tau)$ en multipliant ici le coefficient de régulation $k_i(\tau)$ par la puissance nominale de l'installation thermique, ici du chauffage, Pn_Chi de l'entité Ei, selon la relation suivante :

$$dPi(\tau) = k_i(\tau) \times Pn\_Chi$$

Lors d'une étape S5, sur commande du module de pilotage, chaque entité consommatrice Ei réduit la puissance électrique consommée par son installation thermique Pchi à hauteur de la réduction calculée $dPi(\tau)$.

Lors d'une étape de test S6, à un instant $\tau'$ postérieur à $\tau$, le gestionnaire 11 du réseau 1 vérifie si la puissance globale $Ps(\tau')$ consommée est inférieure ou égale à la puissance de consigne P*s. Par exemple, la vérification S6 peut être réalisée une dizaine de secondes après l'envoi S0 de la consigne de réduction de puissance. En cas de test positif, les baisses de consommation de puissance appliquées par chaque entité, de façon personnalisée, ont été suffisantes pour diminuer la puissance globale consommée au-dessous ou au moins à hauteur de la consigne P*s. Le procédé est donc terminée (étape « END » S7). En cas de test négatif, le gestionnaire 11 transmet une nouvelle commande de baisse aux entités E1 à En, cette commande contenant de nouveau la puissance de consigne P*s. Sur réception de cette nouvelle commande, les étapes S0 à S6 sont réitérées pour l'instant $\tau'$, de façon à ce que chaque entité Ei détermine une nouvelle valeur de réduction de puissance $dPi(\tau')$ et réduise la consommation de son installation thermique afin d'obtenir la puissance de consigne P*s.

Sur la figure 8, on a représenté de façon schématique et simplifiée différentes étapes du procédé.

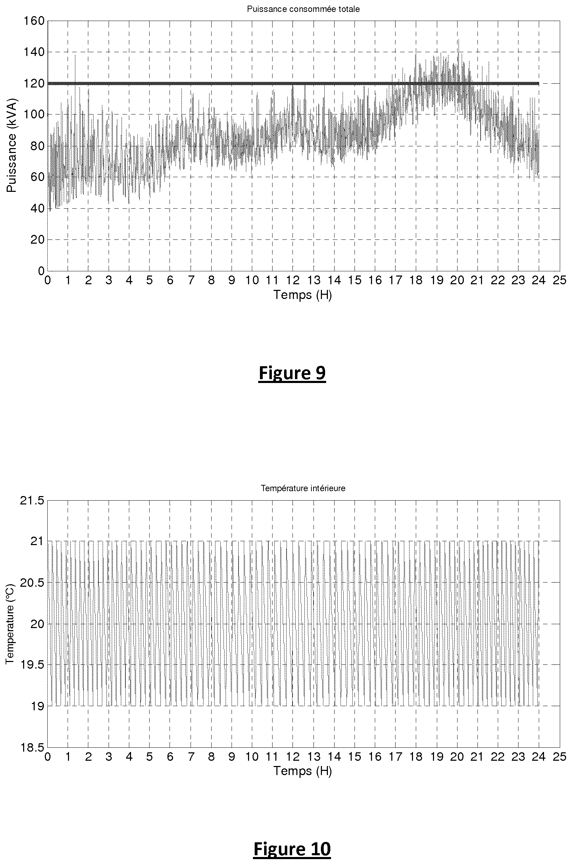

Les figures 9 et 10 représentent respectivement l'évolution de la puissance électrique totale consommée par l'ensemble des entités E1 à EN durant toute une journée et l'évolution de la température de l'air à l'intérieur de l'une des entités Ei, dans le cas où l'invention n'est pas mise en œuvre. On observe sur la figure 9 un pic de consommation autour de la tranche horaire 18h-21h, alors que la température atmosphérique intérieure de l'entité Ei varie entre 19 et 21 °C, ce qui correspond au niveau de confort thermique maximal configuré pour cette entité.

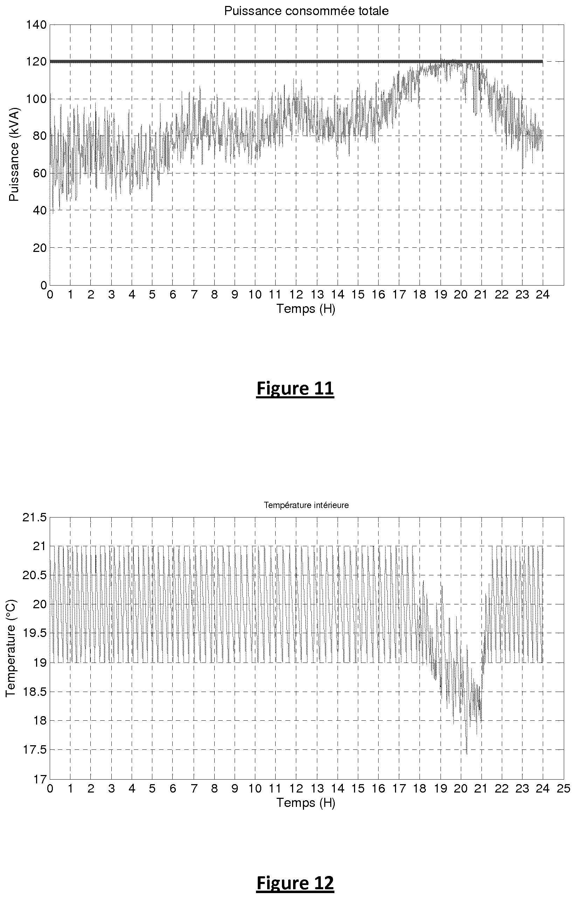

Les figures 11 et 12 représentent respectivement l'évolution de la puissance électrique totale consommée par l'ensemble des entités E1 à EN durant toute une journée et l'évolution de la température de l'air à l'intérieur de l'une des entités Ei, dans le cas où l'invention est mise en œuvre. On observe sur la figure 10 que le pic de consommation de la tranche horaire 18h-21h est effacé, la consommation globale ne dépassant pas la puissance maximale autorisée par le gestionnaire de réseau 11 (ici 120 kVA). Sur la figure 12, on voit que, durant la tranche horaire critique 18h-21h, la température atmosphérique intérieure de l'entité Ei diminue légèrement et varie entre 17,5°C et 20°C.

L'invention concerne aussi un dispositif de régulation de la consommation d'électricité d'une entité consommatrice Ei. Le dispositif est adapté pour mettre en œuvre celles des étapes du procédé précédemment décrit qui sont mises en œuvre par une entité consommatrice Ei. Il est intégré ou connecté au module de pilotage de l'installation thermique de l'entité consommatrice Ei.

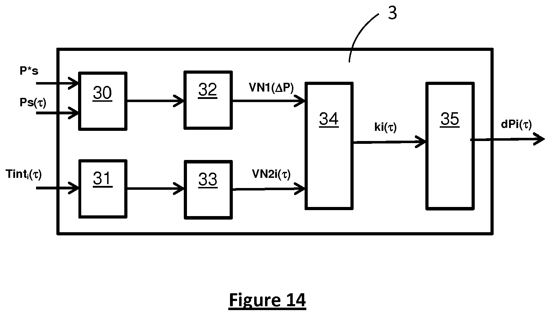

En référence à la figure 14, le dispositif de régulation 3 comprend

- un premier module de communication 30 adapté pour recevoir une puissance électrique globale consommée par ledit ensemble d'entités (E1, ..., EN) et une puissance de consigne (P*s), en provenance du réseau électrique (1);
- un deuxième module de communication 31 adapté pour recevoir une température de l'entité mesurée à un instant donné ;
- un module 32 de détermination d'une première donnée représentative VN1 d'un écart entre la puissance électrique globale consommée $Ps(\tau)$ à un instant donné $\tau$ et une puissance électrique de consigne P*s,
- un module 33 de détermination d'une deuxième donnée $VN2_i$ représentative d'un écart de température entre une température mesurée de l'entité $Tint_i(\tau)$ pour l'instant considéré $\tau$ et une température de référence de l'entité $\textbf{\textit{Tset\_max}}_i$,
- un module 34 de détermination d'un coefficient de régulation de puissance $k_i(\tau)$ pour l'entité Ei à partir de la première donnée VN1 d'écart de puissance et de la deuxième donnée $VN2_i$ d'écart de température,
- un module de commande 35 destiné à commander une réduction $dPi(\tau)$ de la puissance consommée par l'installation thermique de l'entité consommatrice Ei dépendant du coefficient de régulation déterminé

$k_i(\tau)$.

Les premier et deuxième modules de communication 30, 31 peuvent par exemple être connectés au dispositif de pilotage de l'installation thermique, qui intègre lui-même un module de communication avec le réseau 1 et un module de communication avec le capteur thermique de l'entité Ei. En variante, les modules de communication 30 et 31 peuvent être directement reliés au réseau et au capteur de température respectivement.

Les modules 32 et 33 sont adaptés pour mettre en œuvre les étapes S1 et S2 respectivement.

Le module 34 est adapté pour mettre en œuvre l'étape S3, autrement dit les sous-étapes S31 à S34. Il intègre le système flou, précédemment mentionné, conçu pour déterminer le coefficient de régulation à partir des variables d'écart de puissance et d'écart de température par la logique floue.

Le module de commande 35 est destiné à mettre en œuvre l'étape S4.

Les modules 32 à 35 sont des modules logiciels formant un programme d'ordinateur et comprenant des instructions logicielles pour commander la mise en œuvre des étapes de procédé correspondantes, lorsque les modules sont exécutés par un processeur. L'invention concerne donc aussi un programme d'ordinateur comportant des instructions de code de programme pour l'exécution des étapes du procédé précédemment décrit lorsque ledit programme est exécuté sur un ordinateur.

## Revendications

1. Procédé de gestion de la consommation d'électricité d'un réseau électrique (1) auquel est relié un ensemble d'entités consommatrices (E1,...,Ei,...EN) équipées chacune d'une installation thermique (Ch1,...,ChN) consommant de l'électricité pour réguler une température de l'entité, comprenant les étapes suivantes, mises en œuvre parallèlement par chaque entité consommatrice pour un instant donné $(\tau)$ :

a) détermination (S1) d'une première donnée représentative (VN1) d'un écart de puissance entre la puissance électrique consommée par l'ensemble des entités consommatrices et une puissance électrique de consigne ;
b) détermination (S2) d'une deuxième donnée $(VN2_i)$ représentative d'un écart de température entre une mesure de la température régulée de ladite entité et une température de référence propre à ladite entité ;
c) détermination (S3) d'un coefficient de régulation $(k_i(\tau))$ de puissance pour ladite entité à partir de la première donnée d'écart de puissance et de la deuxième donnée d'écart de température ;

d) commande d'une réduction (S4, S5) de la puissance consommée par ladite entité en fonction du coefficient de régulation déterminé.

2. Procédé selon la revendication précédente, **caractérisé en ce que** la détermination (S3) du coefficient de régulation ($k_i(\tau)$) est adaptée pour que la réduction de puissance ($dPi(\tau)$) de chaque entité consommatrice (Ei), déterminée à partir du coefficient de régulation, soit d'autant plus importante que ledit écart de température de l'entité consommatrice est faible.

3. Procédé selon l'une des revendications précédentes, **caractérisé en ce que** les étapes a) à d) sont réitérées jusqu'à ce que la puissance électrique demandée par l'ensemble des entités consommatrices soit inférieure ou égale à la puissance de consigne.

4. Procédé selon l'une des revendications précédentes, **caractérisé en ce que** l'exécution des étapes a) à d) est déclenchée sur réception d'une commande du réseau, notamment d'une commande contenant une puissance de consigne.

5. Procédé selon l'une des revendications précédentes, **caractérisé en ce que** chaque entité reçoit en temps réel la puissance globale consommée par l'ensemble des entités consommatrices, en provenance du réseau.

6. Procédé selon l'une des revendications précédentes, **caractérisé en ce que** le coefficient de régulation ($k_i(\tau)$) est déterminé par une méthode de calcul basée sur la logique floue.

7. Procédé selon la revendication précédente, **caractérisé en ce que** la détermination (S3) du coefficient de régulation comprend

• une première sous-étape de fuzzification (S31) lors de laquelle la première donnée (VN1) d'écart de puissance est traduite en degré(s) d'appartenance (DA1) à un ou plusieurs sous-ensembles qui caractérisent une première composante de contribution de l'entité (Ei) à une diminution de consommation globale de puissance ;
• une deuxième sous-étape de fuzzification (S32) lors de laquelle la deuxième donnée (VN2) d'écart de température est traduite en degré(s) d'appartenance (DA2) à un ou plusieurs sous-ensembles qui caractérisent une deuxième composante de contribution de l'entité (Ei) à la diminution de consommation globale de puissance ;
• une troisième sous-étape d'inférence (S33) lors de laquelle, à partir des résultats des première et deuxième sous_étapes de fuzzification (S31, S32) et de règles d'inférence prédéfinies, on détermine au moins un degré d'appartenance (DA3) à un ou plusieurs sous-ensembles qui caractérisent le coefficient de régulation de puissance ($k_i(\tau)$) ;
• une quatrième sous-étape de défuzzification (S34) lors de laquelle on détermine une valeur numérique de coefficient de régulation ($k_i(\tau)$) à partir des résultats de la troisième sous-étape d'inférence (S33).

8. Procédé selon l'une des revendications précédentes, **caractérisé en ce que** les entités consommatrices sont équipées de l'une au moins des installations thermiques du groupe comportant une installation électrique de chauffage atmosphérique, un chauffe-eau électrique et une installation électrique de climatisation atmosphérique.

9. Procédé selon l'une des revendications précédentes, **caractérisé en ce que** la température de l'entité régulée par l'installation thermique est une température atmosphérique dans un bâtiment ou une température d'eau chauffée.

10. Dispositif de régulation de la consommation d'électricité d'une entité consommatrice reliée à un réseau électrique, adapté pour la mise en œuvre du procédé selon l'une des revendications 1 à 9, ladite entité comportant une installation thermique consommant de l'électricité et destinée à réguler une température de l'entité et appartenant à un ensemble d'entités consommatrices, comprenant :

- un premier module de communication (30) adapté pour recevoir une puissance électrique globale consommée par ledit ensemble d'entités (E1, ..., EN) et une puissance de consigne (P*s), en provenance du réseau électrique (1);
- un deuxième module de communication (31) adapté pour recevoir une température de l'entité mesurée à un instant donné ;
- un module (32) de détermination d'une première donnée représentative (VN1) d'un écart entre la puissance électrique globale consommée ($Ps(\tau)$) à un instant donné ($\tau$) et une puissance électrique de consigne (P*s),
- un module (33) de détermination d'une deuxième donnée (VN2$_i$) représentative d'un écart de température entre une température mesurée de l'entité ($Tint_i(\tau)$) pour l'instant considéré ($\tau$) et une température de référence de l'entité (**Tset_max$_i$**),
- un module (34) de détermination d'un coefficient de régulation de puissance ($k_i(\tau)$) pour l'entité (Ei) à partir de la première donnée (VN1) d'écart de puissance et de la deuxième donnée

(VN2$_i$) d'écart de température,
- un module de commande (35) destiné à commander une réduction (dPi($\tau$)) de la puissance consommée par l'installation thermique de l'entité consommatrice (Ei) dépendant du coefficient de régulation déterminé (k$_i$($\tau$)).

11. Programme d'ordinateur comportant des instructions de code de programme pour l'exécution des étapes du procédé selon l'une des revendications 1 à 9, lorsque ledit programme est exécuté sur un ordinateur.

**Patentansprüche**

1. Verfahren zur Steuerung des Stromverbrauchs eines Stromnetzes (1), an das eine Reihe von Verbrauchseinheiten (El,...., Ei,....EN) angeschlossen ist, die jeweils mit einer thermischen Anlage (Ch1,..., ChN) ausgestattet sind, die Strom verbraucht, um eine Temperatur der Einheit zu regeln, umfassend die folgenden Schritte, die von jeder Verbrauchseinheit zu einem bestimmten Zeitpunkt ($\tau$) parallel ausgeführt werden:

   a) Bestimmung (S1) eines ersten Datenelements (VN1), das eine Leistungsdifferenz zwischen der von allen Verbrauchseinheiten verbrauchten elektrischen Leistung und einer elektrischen Sollwertleistung darstellt;
   b) Bestimmung (S2) eines zweiten Datenelements (VN2$_i$), das eine Temperaturdifferenz zwischen einer Messung der geregelten Temperatur der Einheit und einer für die Einheit spezifischen Referenztemperatur darstellt;
   c) Bestimmung (S3) eines Leistungsregelungskoeffizienten (k$_i$($\tau$)) für die Einheit aus dem ersten Leistungsdifferenzdatenelement und dem zweiten Temperaturdifferenzdatenelement;
   d) Befehl zur Reduzierung (S4, S5) der von der Einheit verbrauchten Leistung in Abhängigkeit des bestimmten Regelungskoeffizienten.

2. Verfahren nach dem vorhergehenden Anspruch, **dadurch gekennzeichnet, dass** die Bestimmung (S3) des Regelungskoeffizienten (k$_i$($\tau$)) so angepasst ist, dass die über den Regelungskoeffizienten bestimmte Leistungsreduzierung (dPi($\tau$)) jeder Verbrauchseinheit (Ei), umso größer ist, je geringer die Temperaturdifferenz der Verbrauchseinheit ist.

3. Verfahren nach einem der vorhergehenden Ansprüche, **dadurch gekennzeichnet, dass** die Schritte a) bis d) wiederholt werden, bis die von allen Verbrauchseinheiten benötigte elektrische Leistung kleiner oder gleich der Sollwertleistung ist.

4. Verfahren nach einem der vorhergehenden Ansprüche, **dadurch gekennzeichnet, dass** die Ausführung der Schritte a) bis d) nach Erhalt eines Befehls aus dem Netz, insbesondere eines Befehls mit einer Sollwertleistung, ausgelöst wird.

5. Verfahren nach einem der vorhergehenden Ansprüche, **dadurch gekennzeichnet, dass** jede Einheit in Echtzeit die gesamte von allen Verbrauchseinheiten verbrauchte Leistung aus dem Netz empfängt.

6. Verfahren nach einem der vorhergehenden Ansprüche, **dadurch gekennzeichnet, dass** der Regelungskoeffizient (k$_i$($\tau$)) durch ein auf Fuzzy-Logik basierendes Berechnungsverfahren bestimmt wird.

7. Verfahren nach dem vorhergehenden Anspruch, **dadurch gekennzeichnet, dass** die Bestimmung (S3) des Regelungskoeffizienten umfasst

   • einen ersten Fuzzifikations-Teilschritt (S31), bei dem das erste Leistungsdifferenzdatenelement (VN1) in einen Zugehörigkeitsgrad (DA1) zu einer oder mehreren Teilmengen übersetzt wird, die eine erste Beitragskomponente der Einheit (Ei) zu einer Reduzierung des gesamten Leistungsverbrauchs charakterisieren;
   • einen zweiten Fuzzifikations-Teilschritt (S32), bei dem das zweite Temperaturdifferenzdatenelement (VN2) in einen Zugehörigkeitsgrad (DA2) zu einer oder mehreren Teilmengen übersetzt wird, die eine zweite Beitragskomponente der Einheit (Ei) zur Reduzierung des gesamten Leistungsverbrauchs charakterisieren;
   • einen dritten Inferenz-Teilschritt (S33), bei dem aus den Ergebnissen des ersten und zweiten Fuzzifikations-Teilschrittes (S31, S32) und vordefinierten Inferenzregeln mindestens ein Zugehörigkeitsgrad (DA3) zu einer oder mehreren Teilmengen bestimmt wird, die den Leistungsregelungskoeffizienten (k$_i$($\tau$)) charakterisieren;
   • einen vierten Defuzzifikation-Teilschritt (S34), bei dem aus den Ergebnissen des dritten Inferenz-Teilschritts (S33) ein Zahlenwert des Regulierungskoeffizienten (k$_i$($\tau$)) bestimmt wird.

8. Verfahren nach einem der vorhergehenden Ansprüche, **dadurch gekennzeichnet, dass** die Verbrauchseinheiten mit mindestens einer der thermischen Anlagen der Gruppe ausgestattet sind, die eine elektrische Raumluftheizungsanlage, einen elektrischen Warmwasserbereiter und eine elektrische Raumluftklimaanlage umfasst.

9. Verfahren nach einem der vorhergehenden Ansprüche, **dadurch gekennzeichnet, dass** die Temperatur der durch die thermische Anlage geregelten Einheit eine Raumlufttemperatur in einem Gebäude oder eine erwärmte Wassertemperatur ist.

**10.** Vorrichtung zur Regelung des Stromverbrauchs einer an ein Stromnetz angeschlossenen Verbrauchseinheit, die zur Durchführung des Verfahrens nach einem der Ansprüche 1 bis 9 ausgelegt ist, wobei die Einheit eine thermische Anlage umfasst, die Strom verbraucht und dazu bestimmt ist, eine Temperatur der Einheit zu regeln und zu einer Reihe von Verbrauchseinheiten gehört, umfassend:

- ein erstes Kommunikationsmodul (30), das angepasst ist, um eine gesamte elektrische Leistung, die von der Reihe von Einheiten (E1, ..., EN) verbraucht wurde, sowie eine Sollwertleistung (P*s) aus dem Stromnetz (1) zu empfangen;
- ein zweites Kommunikationsmodul (31), das angepasst ist, um eine Temperatur der Einheit zu empfangen, die zu einem bestimmten Zeitpunkt gemessen wurde;
- ein Modul (32) zur Bestimmung eines ersten Datenelements (VN1), das eine Differenz zwischen der gesamten verbrauchten elektrischen Leistung (Ps($\tau$)) zu einem bestimmten Zeitpunkt ($\tau$) und einer elektrischen Sollwertleistung (P*s) darstellt,
- ein Modul (33) zur Bestimmung eines zweiten Datenelements (VN2$_i$), das eine Temperaturdifferenz zwischen einer gemessenen Temperatur der Einheit (Tint$_i$($\tau$)) für den betrachteten Zeitpunkt ($\tau$) und eine Referenztemperatur der Einheit (**Tset_max$_i$**) darstellt,
- ein Modul (34) zur Bestimmung eines Leistungsregelungskoeffizienten (k$_i$($\tau$)) für die Einheit (Ei) aus dem ersten Leistungsdifferenzdatenelement (VN1) und dem zweiten Temperaturdifferenzdatenelement (VN2$_i$),
- ein Befehlsmodul, (35), das dazu bestimmt ist, eine Reduzierung (dPi($\tau$)) der von der thermischen Anlage der Verbrauchseinheit (Ei) verbrauchten Leistung in Abhängigkeit des bestimmten Regelungskoeffizienten (k$_i$($\tau$)) zu reduzieren.

**11.** Computerprogrammprodukt, umfassend Programmcodeanweisungen zur Ausführung der Schritte des Verfahrens nach einem der Ansprüche 1 bis 9, wenn das Programm auf einem Computer ausgeführt wird.

**Claims**

**1.** Method for managing the electricity consumption of an electrical network (1) to which is linked a set of consuming entities (E1,...,Ei...EN) each equipped with a thermal installation (Ch1,...,ChN) consuming electricity to regulate a temperature of the entity, comprising the following steps, implemented in parallel by each consuming entity for a given instant ($\tau$):

a) determination (S1) of a first datum (VN1) representative of a power deviation between the electrical power consumed by the set of consuming entities and a setpoint electrical power;
b) determination (S2) of a second datum (VN2$_i$) representative of a temperature deviation between a measurement of the regulated temperature of said entity and a reference temperature specific to said entity;
c) determination (S3) of a power regulation coefficient (k$_i$($\tau$)) for said entity from the first power deviation datum and from the second temperature deviation datum;
d) control of a reduction (S4, S5) of the power consumed by said entity as a function of the determined regulation coefficient.

**2.** Method according to the preceding claim, **characterized in that** the determination (S3) of the regulation coefficient (k$_i$($\tau$)) is adapted for the power reduction (dPi($\tau$)) of each consuming entity (Ei), determined from the regulation coefficient, to be commensurately greater when said temperature deviation of the consuming entity is low.

**3.** Method according to one of the preceding claims, **characterized in that** the steps a) to d) are reiterated until the electrical power demanded by the set of consuming entities is less than or equal to the setpoint power.

**4.** Method according to one of the preceding claims, **characterized in that** the execution of the steps a) to d) is triggered on reception of a command from the network, notably a command containing a setpoint power.

**5.** Method according to one of the preceding claims, **characterized in that** each entity receives, in real time, the overall power consumed by the set of consuming entities, from the network.

**6.** Method according to one of the preceding claims, **characterized in that** the regulation coefficient (k$_i$($\tau$)) is determined by a computation method based on fuzzy logic.

**7.** Method according to the preceding claim, **characterized in that** the determination (S3) of the regulation coefficient comprises

• a first substep of fuzzification (S31) during which the first power deviation datum (VN1) is translated into degree(s) of membership (DA1) to one or more subsets which characterize a first component of contribution of the entity (Ei) to a reduction of overall power consumption;

• a second substep of fuzzification (S32) during which the second temperature deviation datum (VN2) is translated into degree(s) of membership (DA2) to one or more subsets which characterize a second component of contribution of the entity (Ei) to the reduction of overall power consumption;

• a third substep of inference (S33) during which, from the results of the first and second substeps of fuzzification (S31, S32) and from predefined inference rules, at least one degree of membership (DA3) to one or more subsets which characterize the power regulation coefficient $(k_i(\tau))$ is determined;

• a fourth substep of defuzzification (S34) during which a numeric regulation coefficient value $(k_i(\tau))$ is determined from the results of the third substep of inference (S33).

8. Method according to one of the preceding claims, **characterized in that** the consuming entities are equipped with at least one of the thermal installations from the group comprising an electrical atmospheric heating installation, an electric water heater and an electrical atmospheric air conditioning installation.

9. Method according to one of the preceding claims, **characterized in that** the temperature of the entity regulated by the thermal installation is an atmospheric temperature in a building or a heated water temperature.

10. Device for regulating the electricity consumption of a consuming entity linked to an electrical network, adapted to implement the method according to one of Claims 1 to 9, said entity comprising a thermal installation consuming electricity and intended to regulate a temperature of the entity and membership to a set of consuming entities, comprising:

- a first communication module (30) adapted to receive an overall electrical power consumed by said set of entities (E1, ..., EN) and a setpoint power (P*s), from the electrical network (1);
- a second communication module (31) adapted to receive a temperature of the entity measured at a given instant;
- a module (32) for determining a first datum (VN1) representative of a deviation between the overall electrical power consumed $(Ps(\tau))$ at a given instant $(\tau)$ and a setpoint electrical power (P*s);
- a module (33) for determining a second datum $(VN2_i)$ representative of a temperature deviation between a measured temperature of the entity

$(Tint_i(\tau))$ for the instant considered $(\tau)$ and a reference temperature of the entity **(Tset_max$_i$)**;

- a module (34) for determining a power regulation coefficient $(k_i(\tau))$ for the entity (Ei) from the first power deviation datum (VN1) and the second temperature deviation datum $(VN2_i)$;
- a control module (35) intended to control a reduction $(dPi(\tau))$ of the power consumed by the thermal installation of the consuming entity (Ei) dependant on the determined regulation coefficient $(k_i(\tau))$.

11. Computer program comprising program code instructions for the execution of the steps of the method according to one of Claims 1 to 9, when said program is run on a computer.

P
T_rebond
Effet rebond

T_eff

t

**Figure 1**

11

2

E1

10

P*s(τ)

1

Ch1

Ch2

Ps(t)

E2

ChN

EN

**Figure 2**

**Figure 3**

**Figure 4**

**Figure 5**

**Figure 6**

**Figure 8**

| INFERENCE | | ΔT | | | | |
|---|---|---|---|---|---|---|
| | | P | MP | M | MG | G |
| ΔP | P | P | P | MP | M | MG |
| | PM | P | MP | MP | MG | G |
| | M | P | MP | M | MG | G |
| | MG | MP | M | M | MG | G |
| | G | MP | M | MG | G | G |

**Figure 7A**

**Figure 7B**

**Figure 7C**

Puissance consommée totale

**Figure 9**

Température intérieure

**Figure 10**

Puissance consommée totale

**Figure 11**

Température intérieure

**Figure 12**

**Figure 13**

**Figure 14**

**EP 2 990 904 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4100428 A